# EUROPEAN PATENT SPECIFICATION

(11) **EP 2 846 141 B1**
(45) Date of publication and mention of the grant of the patent: **06.12.2017**
(21) Application number: 14183908.4
(22) Date of filing: 08.09.2014
(51) Int. Cl.: G01G 19/08, G01G 23/02

(54) **System for measuring the load acting on a vehicle axle**
System zum Messen der auf eine Fahrzeugachse wirkende Last
Système de mesure de la charge agissant sur un essieu de véhicule

(30) Priority: 09.09.2013 IT MI20131482
(43) Date of publication of application: 11.03.2015
(73) Proprietor: IVECO S.p.A., 10156 Torino (IT)
(72) Inventor: Basile, Salvatore, 10040 Leini' (IT)
(74) Representative: Franzolin, Luigi

(56) References cited:
- EP-A2- 1 612 524
- WO-A1-89/08568
- US-A- 4 589 507

## Description

### Field of the invention

The present invention refers to a system for measuring the load acting on a vehicle axle.

### Description of the prior art

The present invention refers to a device for measuring the load acting on an axle of a vehicle or of a trailer equipped preferably with mechanical suspensions, of the parabolic or semi-elliptical type, etc..

Mechanical suspensions are to be intended as all those suspensions based on the deflection or torsion of a metallic element. Thus such expression has to be intended in the sense that the suspensions may be of any nature, except pneumatic. The need of the driver to know the value of the load on the axles of a vehicle is originated from functional and legislative needs.

To date, measuring the load on the axles have been possible only for vehicles equipped with pneumatic suspensions, by means of pressure sensors connected to the suspensions and able to infer the load weighing on the axle from the pressure measurement.

For the axles having mechanical suspensions, a known solution is to install load cells.

Such solution, although working well, has durability problems, since the load cell is subject to all the stresses caused by the irregularities of the road surface. In other words, the load cell is forced to work as much as the suspensions, but the intrinsic nature of the load cells causes their breaking in a short time.

Although in a less serious way, the same durability problem is felt in the field of the pneumatic suspensions, since also in this case the pressure sensors are subject to the same work cycles as the suspensions.

US4589507 discloses a vehicle wherein a measurement device is located on the vehicle loading floor. Such measurement device is placed in such a manner that some items, for example long items, may be detected by the measurement device only in view of a precises loading position that shall be carefully monitored by the driver. Furthermore the measuring device requires a peculiar design of the vehicle loading floor.

EP1612524 discloses a vehicle where a measuring cylinder is permanently connected to the vehicle loading floor. For

### Summary of the invention

The aim of the present invention is to provide a system for measuring the load acting on a vehicle axle adapted to solve the problems set forth above.

The object of the present invention is a system for measuring a load acting on a vehicle axle, according to claim 1.

The dependent claims describe the preferred embodiments of the invention, and are an integral part of this description.

### Brief description of the Figures

Further characteristics and advantages of the invention will be more apparent in light of a detailed description of a preferred, but non-exclusive, embodiment of a system for measuring the load acting on a vehicle axle, shown with the help of the drawings that are attached hereto, which are merely illustrative and not limitative, wherein:
figure 1 schematically shows a front or rear view of a vehicle equipped with the system that is object of the present invention;
figure 2 shows a first preferred embodiment of the measurement system of figure 1,
figures 3 and 4 show two further preferred embodiments of the measurement system of figure 1.

In the figures the same reference numbers and letters identify the same elements or components.

### Detailed description of a preferred embodiment of the invention

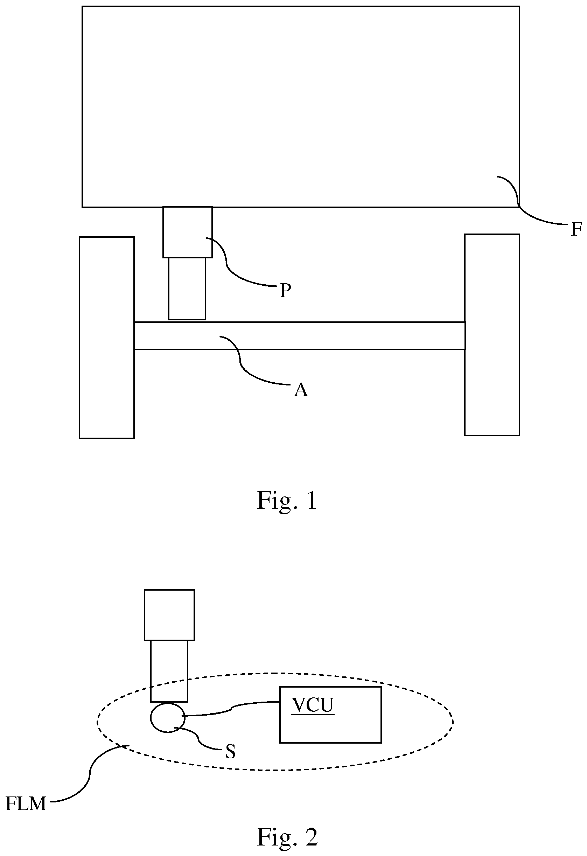

With reference to figure 1, it shows a front and a rear schematic view of a vehicle V. It can be a motor vehicle, or a trailer or any other kind of vehicle equipped with suspensions.

The vehicle comprises a frame F and an axle A, associated to the vehicle by means of the suspensions, not shown.

The vehicle is equipped with extension/retraction means P fixed either to the frame F in correspondence of the axle of the vehicle or directly to the axle A of the vehicle. The extension/retraction means P are positioned and dimensioned in order to be interposed between the frame F and the axle A whose load is intended to be measured when the extension/retraction means P are in extended condition.

In the scope of the present description, "interposition" means that there is a concomitant contact of the extension/retraction means P both with the frame and with the axle A.

Such extension/retraction means comprise means for measuring a load or a load variation FLM which weighs on the axle A. Such measurement means are sensitive to a reciprocal approaching between frame and axle.

A vehicular control unit VCU is adapted to control the extension/retraction means P so that they move from an extended condition, only when the vehicle is stationary or it travels at a lower speed than a predefined threshold to be set, to an retracted condition at least when the vehicle is moving, namely when its speed exceeds zero or said predefined threshold to be set.

The period of time when the extension/retraction means are in extended condition identify a measurement session of the load or of the load variation weighing on that axle.

The extension/retraction means P comprise two opposite ends, a lower end and an upper end. In extended condition, the lower end touches the axle A, while the opposite upper end touches the frame F of the vehicle.

In retracted condition, at least one of the two ends is distanced from the frame or from the axle, respectively.

The means for measuring the load or a load variation FLM may comprise a load cell (see figure 2), or means for measuring a pressure variation of a fluid ((EC o EC+AO), S).

In the latter case, it is a tank at least partially filled with gas/air, internal or external to the extension/retraction means P, whose internal pressure is a function of the deflection/lightening of the extension/retraction means P, proportional to the deflection/lightening of the suspensions of the same axle.

In other words, the internal pressure of such tank at least partially filled with air/gas is a function of a reciprocal position between axle and frame of the vehicle which results in a deflection/lightening of the means for measuring a load variation.

The fact that the means for measuring the load or its variation work only during the measurement sessions causes a lower deterioration of the means themselves, which allows the application of such system to any type of vehicle, off-road vehicles included, which, due to the irregularity of the road surface, would cause the breaking of the measurement systems known in the art in a very short time.

In case of a load cell, such deflection/lightening results in an electric signal proportional to an increase/decrease of the load, while in the case of an air tank (internal or external to the means P) associated to a pressure sensor operatively connected to the air tank, the electric signal of the pressure sensor can be translated into an electric signal proportional to an increase/decrease of the load.

In order to detect both an increase and a decrease of the load weighing on the axle, it is necessary to exert a pre-load on the extension/retraction means. This translates, for example, in a pressurization of the tank at least partially filled with air (EC, EA).

If the value of the pre-load is fixed, regardless of the value of the load weighing on the axle calculated incrementally by means of the previous measurement sessions, the system measures load variations instead of an absolute load.

In other words, some preferred alternative embodiments of the system that is object of the present invention, do not measure the load weighing on the axle in an absolute way, but in an incremental way, namely integrative.

Thus, by starting from a condition of unladen vehicle, a loadless value can be pre-stored in the VCU. At the i-th measurement session, the measure of the variation of the load is acquired, such load variation is algebraically added to the load value calculated at the previous measurement session i - 1.

According to the present invention, a measurement session starts when the vehicle stops or travels at a speed lower than a predefined threshold, preferably to be set, and ends when the vehicle starts to move again, or exceeds said predefined threshold.

A drift in the measurement of the absolute load can be detected, or some load can be accidentally lost while the vehicle moves at a speed exceeding said predefined threshold to be set.

In order to avoid that the measurement system measures a higher load than the actual one, the system may comprise reset means, to be activated in condition of unladen vehicle, which bring the measured value of the load weighing on the axle back to the aforementioned loadless value.

Preferably, the pre-load given to the means for measuring a load variation FLM, by means of the extension/retraction means, to the measurement session i - th, is proportional to the latest load value calculated at the session i - 1th, namely immediately preceding.

In other words, the actuator is stopped when the sensor S (either load or pressure cell) measures the same load measured at the end of the previous measurement session. In such a case, the weight measuring is absolute, session by session, and it does not need of integration of the measures, namely of an incremental summation.

According to a first preferred alternative embodiment, shown in figure 2, the load cell is positioned externally to the extension/retraction means, in correspondence of one of the two ends, so as to be interposed between one of the ends of the means P and the axle or the vehicle frame. In this case the extension/retraction means P may have any nature, for example they can be formed by a hydraulic, pneumatic piston or by an electric ratiomotor with worm screw.

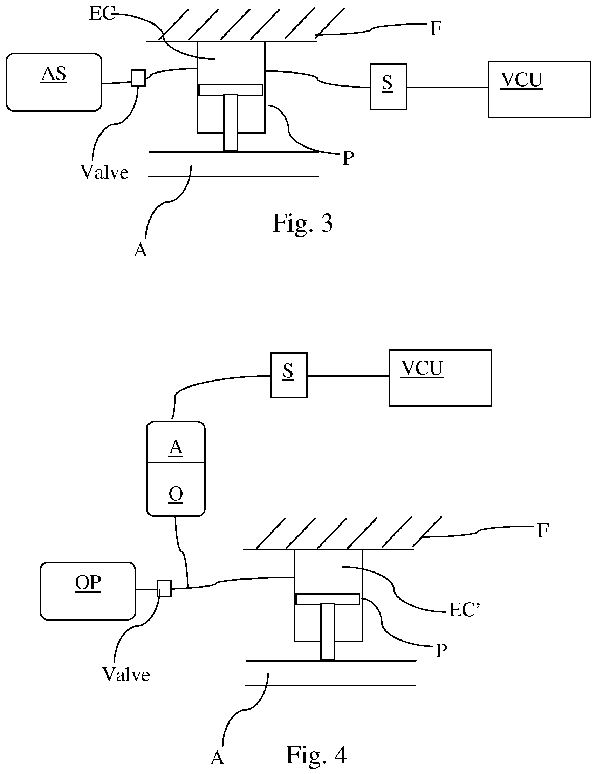

According to a second preferred alternative embodiment of the invention, the extension/retraction means, according to figure 3, are of the pneumatic type and the expansion chamber EC of the piston P, namely that determines the extension of the piston, serves as an air tank operatively connected to a pressure sensor S connected, in its turn, to the vehicular control unit VCU.

Thus, in such alternative embodiment, the means for measuring the load or the load variation FLM are at least partially internal and partially form integral part of the extension/retraction means P.

Such alternative embodiment is particularly easy to be implemented in case of a vehicle that is already equipped with a controllable source of compressed air AS, for example for driving the brakes or for controlling the pneumatic suspension of an axle.

Controllable means that at least a valve Valve is provided to control the flow and/or outflow of the actuating fluid of the means P.

According to a third preferred alternative embodiment of the invention, the extension/retraction means, according to figure 4, are of the hydraulic type.

A liquid/gas tank AO has a lower part operatively communicating with the expansion tank EC' of the hydraulic piston P, and an upper part operatively connected to a pressure sensor S connected, in its turn, with a vehicular VCU.

The tank AO is partially full of hydraulic liquid O and partially full of a gas/air A.

According to a preferred implementation of the second and third alternative embodiment, the pre-load offered by the source of compressed air AS or of pressurized hydraulic liquid OP, is regulated, after an extension phase of the piston P, so that the sensor S measures the same pressure measured at the end of the previous measurement session i - 1. In this case, the pressure value measured by the sensor S at the end of the current measurement session i corresponds to the absolute load value weighing on the axle, and not to its variation.

The third alternative embodiment is particularly indicated for those vehicles that are natively equipped with hydraulic systems, e.g. using oil, for example for braking or for moving auxiliary devices, such as cranes and actuators in general.

In any case, either in case of a load cell associated with a pneumatic, hydraulic or electric piston, or in case of a pneumatic or a hydraulic piston associated to a gas/liquid tank AO, the fact of defining specific measurement sessions when the vehicle is stationary or almost stationary, avoids the measurement means S, namely to the load cells or to the pressure sensors, to work as much as the vehicle suspensions. Such invention can thus be applied to any type of axle and preferably to the axles equipped with mechanical suspensions, namely not pneumatic.

In order to avoid an unnecessary movement of the extension/retraction means, other conditions can be provided, for example the condition of a switch controlled by the driver and/or the condition of engine stop/starting. Although the embodiments refer to electric or pneumatic or hydraulic actuators of the axial type, other alternative embodiments can be effectively implemented. What counts is the physical interposition between frame and axle.

The present invention may advantageously be realized by means of a computer program, which comprises program code means performing one or more steps of said method, when said program is run on a computer.

From the description set forth above it will be possible for the person skilled in the art to embody the invention with no need of describing further construction details.

## Claims

1. System for measuring the load acting on a vehicle axle, the vehicle comprising a frame (F) and said axle (A) being connected to the frame by means of a suspension system, the system comprising
- extension/retraction means (P) fixed indifferently either to the frame (F) in correspondence of the axle (A) or to the vehicle axle (A), in order to interpose between the frame (F) and the axle (A) only when they are in extended position,
- means for measuring a load or a load variation (FLM) on said axle (A) comprising a sensor (S) associated to said extension/retraction means (P) adapted to produce an electric signal proportional to a compression/lightening of the extension/retraction means (P) **characterised in that** first processing means (VCU) is adapted to control the extension/retraction means (P) in order to move in extended condition when the vehicle speed is lower than a predetermined threshold and in retracted condition at least when the vehicle speed exceeds said predetermined threshold and second processing means (VCU) is adapted to calculate a weight value weighing on said axle (A) on the basis of said electric signal.

2. System according to claim 1, wherein said extension/retraction means (P) comprise an electric or hydraulic or pneumatic actuator.

3. System according to one of the preceding claims, wherein said actuator (P) is of the axial type having two opposite ends and wherein said sensor (S) is a load cell integral with said two opposite ends.

4. System according to claim 2, wherein said extension/retraction means (P) comprise a pneumatic actuator having an expansion chamber (EC) connected operatively with a controllable source of compressed air and connected operatively with a pressure sensor (S).

5. Device according to claim 2, wherein said extension/retraction means (D) comprise
- a hydraulic actuator having an expansion (EC) operatively connected with a bottom part of
- a tank (AO) at least partially filled with a hydraulic liquid and partially filled with a gas
- a pressure sensor (S) connected operatively with a top part of said tank (AO).

6. System according to any of the preceding claims, wherein said first processing means are configured to control said extension/retraction means (P) in order to impart, during the extension phase, a predetermined pre-load of interposition and wherein said second processing means are configured to calculate a load variation acting on said axle (A) and consequently an absolute value of load acting on said axle (A) incrementally through one or more measuring sessions.

7. System according to claim 6, wherein said second processing means comprise means to store an initial load value weighing on said axle (A) relating to a condition of fully unladen vehicle.

8. System according to any of the preceding claims from 1 to 5, wherein said first processing means are configured to control said extension/retraction means (P) in order to impart, during the extension phase, a predetermined fixed pre-load of interposition proportional to a load value previously calculated acting on said axle (A) and wherein said second processing means are configured to incrementally calculate an absolute value of load acting on said axle (A).

9. Terrestrial vehicle comprising a frame (F) and said axle (A) connected to the frame by means of a suspension system and a system for measuring the load acting on a vehicle axle according to any one of the claims from 1 to 8.

10. Method for measuring the load acting on the axle of a vehicle comprising the measuring system according to any of the preceding claims from 1 to 8, the method comprising one or more measuring sessions, each measuring session comprising the following steps:
- check of a speed condition of the vehicle lower than a predetermined threshold, if such condition is verified
- extension of said extension/retraction means (P) so that a simultaneous contact is realized between the extension/retraction means (P) and both the frame (F) and the axle (A),
- acquisition of a load variation or of an absolute weight weighing on said axle (A),
- if, on the contrary, said speed exceeds said predetermined threshold, then
- retraction of said extension/retraction means (P).

11. Method according to claim 10 wherein said extension is performed so that a fixed pre-load of interposition is defined and further comprising a step to add algebraically a variation load value of a current session and an absolute load value weighing on the axle (A) calculated during an immediately preceding session.

12. Method according to claim 11 wherein said extension is performed so that a fixed pre-load is defined in order to measure only weight variations, consequently, the absolute weight is calculated incrementally.

13. Method according to claim 11 wherein said extension is performed so that a variable pre-load is defined, corresponding to the load weighing on the axle measured at the end of an immediately preceding session.

14. Computer program comprising program code means adapted to perform all the steps of the claims from 10 to 13, when said program is run on a computer.

15. Computer-readable means comprising a recorded program, said computer-readable means comprising program code means adapted to perform all the steps according to the claims from 9 to 12, when said program is run on a computer.

## Patentansprüche

1. System zur Messung der Last, die auf eine Fahrzeugachse wirkt, welches Fahrzeug einen Rahmen (F) umfasst, und welche Achse (A) mit dem Rahmen durch ein Aufhängungssystem verbunden ist, welches System umfasst:
- Ausfahr-/Rückzugsmittel (P), die unbestimmt entweder an dem Rahmen (F) entsprechend der Achse (A) oder an der Fahrzeugachse (A) befestigt sind, derart, dass sie zwischen dem Rahmen (F) und der Achse (A) lediglich dann einliegen, wenn sie sich in der ausgefahrenen Position befinden,
- Mittel zur Messung einer Last oder einer Lastabweichung (FLM) auf die Achse (A), umfassend einen Sensor (S), der den Ausfahr-/Rückzugsmitteln (P) zugeordnet ist und dazu vorgesehen ist, ein elektrisches Signal proportional zu einer Kompression/Entlastung der Ausfahr-/Rückzugsmittel (P) zu erzeugen,
**dadurch gekennzeichnet, dass** erste Verarbeitungsmittel (VCU) dazu vorgesehen sind, die Ausfahr-/Rückzugsmittel (P) derart zu steuern, dass sie sich in die ausgefahrene Stellung bewegen, wenn die Fahrzeuggeschwindigkeit niedriger ist als ein vorbestimmter Schwellwert, und in die zurückgezogene Stellung, zumindest wenn die Fahrzeuggeschwindigkeit den vorbestimmten Schwellwert überschreitet, und zweite Verarbeitungsmittel (VCU), die dazu vorgesehen sind, einen Gewichtswert, der auf die Achse (A) wirkt, auf der Basis des elektrischen Signals zu berechnen.

2. System gemäß Anspruch 1, bei welchem die Ausfahr-/Rückzugsmittel (P) einen elektrischen oder hydraulischen oder pneumatischen Aktuator umfassen.

3. System gemäß einem der vorhergehenden Ansprüche, bei welchem der Aktuator (P) von dem Axialtyp ist, mit zwei gegenüberliegenden Enden, wobei der Sensor (S) eine Lastzelle ist, die einteilig mit zwei gegenüberliegenden Enden ausgebildet ist.

4. System gemäß Anspruch 2, bei welchem die Ausfahr-/Rückzugsmittel (P) einen pneumatischen Aktuator umfassen, mit einer Expansionskammer (EC), die operativ mit einer steuerbaren Druckluftquelle verbunden ist und operativ mit einem Drucksensor (S) verbunden ist.

5. Vorrichtung gemäß Anspruch 2, bei welcher die Ausfahr-/Rückzugsmittel (D) umfassen:
- einen hydraulischen Aktuator mit einer Ausdehnung (EC), die operativ mit einem unteren Teil von
- einem Tank (AO) verbunden ist, der zumindest teilweise mit einer hydraulischen Flüssigkeit und teilweise mit einem Gas gefüllt ist,
- einem Drucksensor (S), der operativ mit einem oberen Teil des Tanks (AO) verbunden ist.

6. System gemäß einem der vorhergehenden Ansprüche, bei welchem die ersten Verarbeitungsmittel dazu vorgesehen sind, die Ausfahr-/Rückzugsmittel (P) derart zu steuern, dass sie während der Ausfahrphase eine vorbestimmte Zwischeneinlage-Vorlast ausüben, und die zweiten Verarbeitungsmittel dazu vorgesehen sind, eine Lastabweichung auf die Achse (A) und infolgedessen einen Absolutwert einer auf die Achse (A) wirkenden Last stufenweise durch eine oder mehrere Messzyklen zu berechnen.

7. System gemäß Anspruch 6, bei welchem die zweiten Verarbeitungsmittel Mittel zur Speicherung eines Anfangslastwerts umfassen, der auf die Achse (A) wirkt und sich auf einen vollständig unbeladenen Fahrzeugzustand bezieht.

8. System gemäß einem der vorhergehenden Ansprüche 1 bis 5, bei welchem die ersten Verarbeitungsmittel dazu vorgesehen sind, die Ausfahr-/Rückzugsmittel (P) derart zu steuern, dass sie während der Ausfahrphase eine vorbestimmte festgelegte Zwischeneinlage-Vorlast proportional zu einem auf die Achse (A) wirkenden zuvor berechneten Lastwert ausüben, und wobei die zweiten Berechnungsmittel dazu vorgesehen sind, schrittweise einen Absolutwert der auf die Achse (A) wirkenden Last zu berechnen.

9. Landfahrzeug, umfassend einen Rahmen (F) und die Achse (A), die mit dem Rahmen mittels eines Aufhängungssystems verbunden ist, und ein System zur Messung der auf eine Fahrzeugachse wirkenden Last gemäß einem der Ansprüche 1 bis 8.

10. Verfahren zur Messung der auf die Achse eines Fahrzeugs wirkenden Last, umfassend das Messsystem gemäß einem der vorhergehenden Ansprüche 1 bis 8, welches Verfahren einen oder mehrere Messzyklen umfasst, von denen jeder Messzyklus die folgenden Schritte umfasst:
- Prüfen, ob ein Geschwindigkeitszustand des Fahrzeugs niedriger ist als eine vorbestimmte Schwelle, und falls diese Bedingung verifiziert ist:
- Ausfahren der Ausfahr-/Rückzugsmittel (P), derart, dass ein gleichzeitiger Kontakt der Ausfahr-/Rückzugsmittel (P) sowohl mit dem Rahmen (F) als auch mit der Achse (A) realisiert wird,
- Ermittlung einer Lastabweichung oder eines absoluten Gewichts, das auf der Achse (A) lastet,
- falls hingegen die Geschwindigkeit die vorbestimmte Stelle überschreitet:
- Zurückziehen der Ausfahr-/Rückzugsmittel (P).

11. Verfahren gemäß Anspruch 10, bei welchem das Ausfahren so durchgeführt wird, dass eine vorbestimmte Zwischeneinlage-Vorlast festgelegt wird, und ferner umfassend einen Schritt der algebraischen Addition eines Lastabweichungswerts eines aktuellen Zyklus und eines absoluten Lastwerts, der auf die Achse (A) wirkt, und während eines unmittelbar vorhergehenden Zyklus berechnet worden ist.

12. Verfahren gemäß Anspruch 11, bei welchem das Ausfahren derart durchgeführt wird, dass eine festgelegte Vorlast definiert wird, um lediglich Gewichtsabweichungen zu messen, so dass infolgedessen das absolute Gewicht schrittweise berechnet wird.

13. Verfahren gemäß Anspruch 11, bei welchem das Ausfahren derart durchgeführt wird, dass eine variable Vorlast definiert wird, entsprechend der auf die Achse wirkenden Last, gemessen am Ende eines unmittelbar vorhergehenden Zyklus.

14. Computerprogramm, umfassend Programmcode-Mittel, dazu vorgesehen, alle Schritte der Ansprüche 10 bis 13 durchzuführen, wenn das Programm auf einem Computer ausgeführt wird.

15. Computerlesbare Mittel, umfassend ein gespeichertes Programm, welche computerlesbaren Mittel Programmcode-Mittel umfassen, die dazu vorgesehen sind, alle Schritte der Ansprüche 9 bis 12 durchzuführen, wenn das Programm auf einem Computer ausgeführt wird.

## Revendications

1. Système de mesure de la charge agissant sur un essieu de véhicule, le véhicule comprenant un châssis (F) et ledit essieu (A) étant raccordé au châssis au moyen d'un système de suspension, le système comprenant
- des moyens de déploiement/rétraction (P) fixés indifféremment soit contre le châssis (F) en correspondance avec l'essieu (A) soit contre l'essieu (A) de véhicule, afin de s'intercaler entre le châssis (F) et l'essieu (A) uniquement lorsqu'ils sont dans une position déployée,
- des moyens de mesure d'une charge ou d'une variation de charge (FLM) sur ledit essieu (A) comprenant un capteur (S) associé auxdits moyens de déploiement/rétraction (P) adapté pour produire un signal électrique proportionnel à une compression/un allègement des moyens de déploiement/rétraction (P), **caractérisé en ce qu'**un premier moyen de traitement (VCU) est adapté pour contrôler les moyens de déploiement/rétraction (P) afin qu'ils passent à un état déployé lorsque la vitesse du véhicule est inférieure à un seuil prédéterminé et à un état rétracté au moins lorsque la vitesse du véhicule dépasse ledit seuil prédéterminé, et qu'un second moyen de traitement (VCU) est adapté pour calculer une valeur pondérale pesant sur ledit essieu (A) sur la base dudit signal électrique.

2. Système selon la revendication 1, dans lequel lesdits moyens de déploiement/rétraction (P) comprennent un actionneur électrique ou hydraulique ou pneumatique.

3. Système selon l'une quelconque des revendications précédentes, dans lequel ledit actionneur (P) est du type axial présentant deux extrémités opposées et dans lequel ledit capteur (S) est une cellule de chargement solidaire desdites deux extrémités opposées.

4. Système selon la revendication 2, dans lequel lesdits moyens de déploiement/rétraction (P) comprennent un actionneur pneumatique présentant une chambre d'expansion (EC) raccordée de manière opérationnelle à une source réglable d'air comprimé et raccordée de manière opérationnelle à un capteur de pression (S).

5. Dispositif selon la revendication 2, dans lequel lesdits moyens de déploiement/rétraction (D) comprennent
- un actionneur hydraulique présentant une expansion (EC) raccordée de manière opérationnelle à une partie inférieure d'un
- réservoir (AO) au moins partiellement rempli d'un liquide hydraulique et partiellement rempli d'un gaz
- un capteur de pression (S) raccordé de manière opérationnelle à une partie supérieure dudit réservoir (AO) .

6. Système selon l'une quelconque des revendications précédentes, dans lequel lesdits premiers moyens de traitement sont configurés pour contrôler lesdits moyens de déploiement/rétraction (P) afin de conférer, pendant la phase de déploiement, une pré-charge prédéterminée d'intercalation et dans lequel lesdits seconds moyens de traitement sont configurés pour calculer une variation de charge agissant sur ledit essieu (A) et par conséquent une valeur absolue de charge agissant sur ledit essieu (A) par incrémentation à travers une ou plusieurs sessions de mesure.

7. Système selon la revendication 6, dans lequel lesdits seconds moyens de traitement comprennent des moyens pour stocker une valeur de charge initiale pesant sur ledit essieu (A) relative à un état de véhicule complètement à vide.

8. Système selon l'une quelconque des revendications 1 à 5, dans lequel lesdits premiers moyens de traitement sont configurés pour contrôler lesdits moyens de déploiement/rétraction (P) afin de conférer, pendant la phase de déploiement, une pré-charge fixe prédéterminée d'intercalation proportionnelle à une valeur de charge calculée préalablement agissant sur ledit essieu (A) et dans lequel lesdits seconds moyens de traitement sont configurés pour calculer par incrémentation une valeur absolue de charge agissant sur ledit essieu (A).

9. Véhicule terrestre comprenant un châssis (F) et ledit essieu (A) raccordé au châssis au moyen d'un système de suspension et un système de mesure de la charge agissant sur un essieu de véhicule selon l'une quelconque des revendications 1 à 8.

10. Procédé de mesure de la charge agissant sur l'essieu d'un véhicule comprenant le système de mesure selon l'une quelconque des revendications 1 à 8, le procédé comprenant une ou plusieurs sessions de mesure, chaque session de mesure comprenant les étapes suivantes :
- vérifier si un état de vitesse du véhicule est inférieur à un seuil prédéterminé, si un tel état est avéré
- le déploiement desdits moyens de déploiement/rétraction (P) de sorte qu'un contact simultané soit réalisé entre les moyens de déploiement/rétraction (P) et tant le châssis (F) que l'essieu (A),
- l'acquisition d'une variation de charge ou d'un poids absolu pesant sur ledit essieu (A),
- si, au contraire, ladite vitesse dépasse ledit seuil prédéterminé, alors
- la rétraction desdits moyens de déploiement/rétraction (P).

11. Procédé selon la revendication 10, dans lequel ledit déploiement est exécuté de sorte qu'une pré-charge fixe d'intercalation soit définie et comprenant en outre une étape pour ajouter algébriquement une valeur de charge de variation d'une session en cours et une valeur de charge absolue pesant sur l'essieu (A) calculée pendant une session immédiatement précédente.

12. Procédé selon la revendication 11, dans lequel ledit déploiement est exécuté de sorte qu'une pré-charge fixe soit définie afin de mesurer uniquement des variations de poids, par conséquent, le poids absolu soit calculé par incrémentation.

13. Procédé selon la revendication 11, dans lequel ledit déploiement est exécuté de sorte qu'une pré-charge variable soit définie, correspondant à la charge pesant sur l'essieu mesurée à l'extrémité d'une session immédiatement précédente.

14. Programme d'ordinateur comprenant des moyens de code programme adaptés pour exécuter toutes les étapes des revendications 10 à 13, lorsque ledit programme est lancé sur un ordinateur.

15. Moyens lisibles par ordinateur comprenant un programme enregistré, lesdits moyens lisibles par ordinateur comprenant des moyens de code de programme adaptés pour exécuter toutes les étapes selon les revendications 9 à 12, lorsque ledit programme est lancé sur un ordinateur.
